# EUROPÄISCHE PATENTSCHRIFT

(11) **EP 3 149 347 B1**
(45) Veröffentlichungstag und Bekanntmachung des Hinweises auf die Patenterteilung: **18.12.2019**
(21) Anmeldenummer: 15725011.9
(22) Anmeldetag: 27.05.2015
(51) Int. Cl.: F16B 5/02, F16B 43/00, F16B 12/14, F16B 12/20

(54) **BEFESTIGUNGSVORRICHTUNG ZUR BEFESTIGUNG EINES GEGENSTANDES AN EINER WAND UND BEFESTIGUNGSSYSTEM**
FASTENING DEVICE FOR FASTENING AN OBJECT TO A WALL, AND FASTENING SYSTEM
DISPOSITIF DE FIXATION SERVANT À FIXER UN OBJET SUR UNE PAROI ET SYSTÈME DE FIXATION

(30) Priorität: 02.06.2014 DE 102014210314
(43) Veröffentlichungstag der Anmeldung: 05.04.2017
(73) Patentinhaber: BSH Hausgeräte GmbH, 81739 München (DE)
(72) Erfinder: KLEMM, Jochen, 69207 Sandhausen (DE); LIEWKE, Holm, 75015 Bretten (DE); NEUMANN, Ulmar, 76694 Forst (DE); REULE, Michael, 68782 Brühl (DE); THUMM, Andreas, 75015 Bretten (DE); ZIMMERMANN, Peter, 70825 Korntal-Münchingen (DE)
(86) Internationale Anmeldenummer: PCT/EP2015/061630
(87) Internationale Veröffentlichungsnummer: WO 2015/185396

(56) Entgegenhaltungen:
- EP-A2- 0 524 412
- DE-U1-202012 003 576
- US-B1- 7 213 346

## Beschreibung

Die vorliegende Erfindung betrifft eine Befestigungsvorrichtung zur Befestigung eines Gegenstandes an einer Wand sowie ein Befestigungssystem, das eine solche Befestigungsvorrichtung umfasst.

Bei der Befestigung von Gegenständen an einer Wand ist es in der Regel erforderlich den Gegenstand an mehr als einem Punkt mit der Wand zu verbinden, das heißt an dieser zu befestigen. Normalerweise werden Gegenstände an zwei Punkten an einer Wand befestigt. Ein Problem, dass sich bei dieser Art der Befestigung stellt, besteht darin, dass eine zuverlässige horizontale Ausrichtung des Gegenstandes aufgrund unterschiedlicher Höhen der Befestigungspunkte, die auch als Anschraubpunkte bezeichnet werden, nicht ausgeschlossen werden kann. Ein gegebenenfalls vorliegender Höhenversatz zwischen den Befestigungspunkten kann durch Verwendung einer Befestigungsvorrichtung mit Exzenter ausgeglichen werden. Eine solche Befestigungsvorrichtung ist beispielsweise in der EP 2 145 133 B1 beschrieben. Diese Befestigungsvorrichtung besteht aus einem Dorn, einem verdrehbar an dem Dorn angeordneten Exzenter und einer Kappe zur form- und/oder kraftschlüssigen Befestigung an dem Exzenter. Durch die Kappe wird der Gegenstand gesichert.

Die EP 0524412 A2 offenbart ein Befestigungselement mit einer dübelartigen Buchse. Bei einem Ausführungsbeispiel weist die dübelartige Buchse aus Kunststoff einen ersten zylindrischen Bohrungsabschnitt auf, in den ein nach unten hin gebördelter Rand der Befestigungsbohrung des zu befestigenden Teils greift.

Weiterhin wird in der US 7,213,346 B1 ein Installationswerkzeug für horizontal verschiebliche Bretter offenbart. Insbesondere wird eine Vorrichtung für die Installation von Verkleidungsbrettern beschrieben, die aus einem Körperelement, einem seitlichen Anschlusselement und einem Nockenelement, das drehbar mit dem Körperelement in Eingriff steht, besteht. Das Nockenelement weist ein exzentrisch gekrümmtes Nockensegment auf.

In der DE 202012003576 U1 wird eine Befestigungsvorrichtung mit einer Klemmvorrichtung für eine Sitzbank- oder Tischkonstruktion offenbart. Insbesondere wird eine Schraubverbindung mit einer Gewindeschraube beschrieben. Durch einen keilförmigen Klemmteil, welcher über eine keilförmig ausgeführte Seite sowie über eine Klemmfläche verfügt, wird die Gewindeschraube durch eine größer ausgestaltete Bohrung geführt, um beim Spannen des Klemmteils zusammen mit einer schräg verlaufenden Innenseite eine Bewegung nach links oder rechts zu ermöglichen, sodass eine Platte entsprechend zwischen der Klemmfläche und einer gegenüberliegenden Seitenwand einer U-förmigen Vertiefung verspannt ist.

Ein Nachteil, der sich bei solchen Befestigungsvorrichtungen ergibt, ist, dass die Befestigung aufwändig ist und ein Risiko des Herabfallens des Gegenstandes insbesondere eines schweren Gegenstandes bei der Befestigung besteht.

Aufgabe der vorliegenden Erfindung ist es daher eine Lösung zu schaffen, mit der auf einfache Weise ein zuverlässiges Befestigen eines Gegenstandes an einer Wand möglich ist.

Der Erfindung liegt die Erkenntnis zugrunde, dass diese Aufgabe gelöst werden kann, indem die Anzahl der Schritte bis zum gesicherten Halt des Gegenstandes minimiert wird.

Gemäß einem ersten Aspekt betrifft die Erfindung daher eine Befestigungsvorrichtung zur Befestigung eines Gegenstandes an einer Wand, die ein Befestigungselement, ein Anlageelement zum Anliegen an einer Montagewand und ein Halteelement zumindest zum Halten zumindest eines Teils des Gegenstandes sowie eine Durchlassöffnung aufweist, die zumindest durch das Halteelement und das Anlageelement zum Durchlass des Befestigungselementes verläuft. Die Befestigungsvorrichtung ist dadurch gekennzeichnet, dass das Anlageelement und das Halteelement über ein Verbindungselement miteinander verbunden sind, das Halteelement, das Verbindungselement und das Anlageelement zusammen eine einteilige Befestigungseinheit ist und das Verbindungselement einen Exzenter ist.

Als Befestigungsvorrichtung wird erfindungsgemäß eine Vorrichtung verstanden, mittels derer ein Gegenstand an einer Wand befestigt werden kann. Die Befestigungsvorrichtung besteht erfindungsgemäß aus einem Befestigungselement und einer Befestigungseinheit, durch die das Befestigungselement durch die Durchlassöffnung geführt ist. Die Befestigung erfolgt hierbei über das Befestigungselement, das mit der Befestigungseinheit der Befestigungsvorrichtung zusammenwirkt. Das Befestigungselement stellt ein Element dar, das teilweise in die Wand eingebracht wird. Das Befestigungselement ist vorzugsweise eine Schraube. Der Teil des Befestigungselementes, der über die Wand hinausragt, dient erfindungsgemäß zur Lagerung der Befestigungseinheit der Befestigungsvorrichtung, insbesondere zur zumindest zeitweiligen drehbaren Lagerung der Befestigungseinheit der Befestigungsvorrichtung. Das Befestigungselement weist eine Länge auf, die größer als die Tiefe der Befestigungseinheit und damit der Länge der Durchlassöffnung ist. Besonders bevorzugt weist das Befestigungselement einen Kopf, insbesondere einen Schraubenkopf auf, dessen Durchmesser größer als der Durchmesser der Durchlassöffnung ist.

Der Gegenstand, der mittels der Befestigungsvorrichtung an der Wand befestigt werden kann, kann ein Möbelstück, beispielsweise ein Schrank sein. Vorzugsweise stellt der Gegenstand aber eine Dunstabzugshaube dar. Insbesondere bei Dunstabzugshauben ist aus optischen Gründen aber auch für die vorschriftgemäße Funktion ein Befestigen der Dunstabzugshaube und insbesondere des Gehäuses der Dunstabzugshaube mit exakter horizontaler Ausrichtung von Bedeutung. Die Wand stellt vorzugsweise eine Raumwand dar, kann aber auch eine andere Wand beispielsweise eine Verkleidungswand oder eine Möbelwand sein.

Die Befestigungseinheit der erfindungsgemäßen Befestigungsvorrichtung umfasst ein Anlageelement zum Anliegen an einer Montagewand. Das Anlageelement kann auch als Stützelement bezeichnet werden und stellt vorzugsweise eine Platte oder Scheibe dar. Die Form des Anlageelementes ist nicht auf eine bestimmte Form beschränkt. So kann das Anlageelement beispielsweise eine runde oder eckige Form aufweisen. Weiterhin kann das Anlageelement auch der Form des Querschnitts des Verbindungselementes aufweisen. Im einfachsten Fall kann daher das Anlageelement die Seite des Verbindungselementes darstellen, die dem Halteelement abgewandt ist.

Zusätzlich zu dem Anlageelement umfasst die Befestigungseinheit der Befestigungsvorrichtung ein Halteelement. Das Halteelement dient erfindungsgemäß zumindest zum Angreifen an zumindest einem Teil des Gegenstandes. Als Angreifen wird hierbei insbesondere ein Verhindern der Bewegung des Gegenstandes in Längsrichtung der Befestigungsvorrichtung, das heißt in Längsrichtung des Befestigungselementes verstanden. Durch Angreifen an zumindest einen Teil des Gegenstandes wird der Gegenstand insgesamt an der Befestigungsvorrichtung gehalten. Das Halteelement kann erfindungsgemäß auch weitere Funktionen zusätzlich zu dem Angreifen an einen Teil des Gegenstandes besitzen, wie weiter unten genauer beschrieben wird. Der Teil des Gegenstandes, an den das Halteelement angreift, ist vorzugsweise ein Bereich eines Randes des Gegenstandes. Insbesondere stellt der Teil des Gegenstandes an den das Halteelement angreift vorzugsweise einen Bereich einer Aufnahmeöffnung in einem Aufnahmebereich einer Rückwand des Gegenstandes oder in einem mit der Rückwand verbundenen Aufnahmebereich dar.

In der Befestigungsvorrichtung ist erfindungsgemäß eine Durchlassöffnung für den Durchlass des Befestigungselementes vorgesehen. Die Durchlassöffnung erstreckt sich zumindest durch das Halteelement und das Anlageelement. Im befestigten Zustand des Gegenstandes liegt zumindest ein Teil des Befestigungselementes noch in der Durchlassöffnung.

Erfindungsgemäß sind das Anlageelement und das Halteelement über ein Verbindungselement miteinander verbunden. Insbesondere liegt das Verbindungselement zwischen dem Halteelement und dem Anlageelement. Die Durchlassöffnung für das Befestigungselement erstreckt sich erfindungsgemäß auch durch das Verbindungselement. Die Abmessungen des Verbindungselementes in den Richtungen senkrecht zu der Achse der Durchlassöffnung sind vorzugweise geringer als die Abmessungen des Anlageelementes und des Halteelementes in diesen Richtungen. Zumindest ist aber die Abmessung des Verbindungselementes senkrecht zu der Achse der Durchlassöffnung geringer als die Ablage des Halteelementes in dieser Richtung. Die Abmessung des Anlageelementes kann hingegen gemäß einer Ausführungsform der Abmessung des Verbindungselementes entsprechen. In diesem Fall bildet das Anlageelement das dem Halteelement abgewandte Ende des Verbindungselementes, insbesondere die der Wand zugewandte Stirnseite des Verbindungselementes.

Das Halteelement, das Verbindungselement und das Anlageelement bilden zusammen eine einteilige Befestigungseinheit. Diese drei Teile der Befestigungsvorrichtung sind somit als vorgefertigte Einheit ausgestaltet. Besonders bevorzugt sind die drei Teile unlösbar miteinander verbunden. Als einteilige Befestigungseinheit wird hierbei eine Einheit bezeichnet, die vor der Anbringung an der Wand zu einer Einheit zusammengefügt oder gebildet ist und deren Bereiche im zusammengefügten oder gebildeten Zustand untrennbar miteinander verbunden sind. Das Erzeugen der Bereiche kann vorzugsweise auch bereits bei der Herstellung der Einheit erfolgen. Dies bedeutet, dass die Elemente, das heißt das Halteelement, das Anlageelement und das Verbindungselement lediglich Bereiche eines einteiligen Bauteils darstellen und nicht als separate Bauteile hergestellt und anschließend miteinander verbunden werden. Beispielsweise können die drei Elemente als Bereiche eines einzigen Spritzgussteils vorliegen.

Erfindungsgemäß stellt das Verbindungselement ein Exzenter dar. Als Exzenter wird hierbei ein Körper verstanden, dessen Mantelfläche über den Umfang des Körpers unterschiedliche Abstände zu der Achse des Körpers aufweist. Die Achse des Verbindungselementes wird durch die Durchlassöffnung gebildet, in die das Befestigungselement eingeführt wird. Die Durchlassöffnung der Befestigungsvorrichtung ist somit zu dem Mittelpunkt des Verbindungselementes versetzt in dem Verbindungselement vorgesehen. Da die Achse der Durchlassöffnung und des Befestigungselementes vorzugsweise identisch sind, werden diese beiden Achsen im Folgenden nur entweder als Achse der Durchlassöffnung oder als Achse des Befestigungselementes bezeichnet. Die entsprechenden Ausführungen gelten aber soweit anwendbar auch für die jeweils andere Achse.

Die Befestigungseinheit der Befestigungsvorrichtung bestehend aus Anlageelement, Verbindungselement und Halteelement ist auf dem Befestigungselement beweglich gehalten. Insbesondere kann das Befestigungselement in der Durchlassöffnung in Längsrichtung der Durchlassöffnung zumindest über eine gewisse Strecke bewegt werden, insbesondere in diese eingeführt werden. Zudem kann die Befestigungseinheit um das Befestigungselement zumindest in einem Ausrichtungszustand der Befestigungsvorrichtung, das heißt während des Ausrichtens des Gegenstandes vor der endgültigen Befestigung, gedreht werden.

Als Drehen der Befestigungseinheit oder von Elementen der Befestigungseinheit wird im Folgenden soweit nicht anders angegeben, stets das Drehen um die Achse der Durchlassöffnung verstanden, das auch als Drehen um die Achse des Befestigungselementes, als Drehen um das Befestigungselement oder als Drehen um die Durchlassöffnung bezeichnet wird.

Indem bei der erfindungsgemäßen Befestigungsvorrichtung das Anlageelement, das Halteelement und das Verbindungselement als eine einteilige Befestigungseinheit ausgebildet sind, das heißt ein einziges Bauteil bilden, ist die Befestigung des Gegenstandes an der Wand vereinfacht. Insbesondere wird durch das Halteelement der Gegenstand an einer Bewegung in Längsrichtung der Durchlassöffnung der Befestigungsvorrichtung gehindert. Da das Halteelement mit dem Verbindungselement und dem Anlageelement zu einer Einheit verbunden ist, ist ein separates Anbringen des Halteelementes bei der vorliegenden Erfindung nicht erforderlich. Dies ist insbesondere bei der Befestigung von schweren Gegenständen, wie beispielsweise einer Dunstabzugshaube von Vorteil, da der Benutzer in der Regel das Gewicht des Gegenstandes halten muss und eine schnelle Befestigung daher wünschenswert ist.

Indem zudem das Verbindungselement ein Exzenter darstellt, kann ein Höhenversatz auf einfache Weise ausgeglichen werden. Hierzu ist es bei der vorliegenden Erfindung lediglich erforderlich ein Bauteil, nämlich die aus Anlageelement, Halteelement und Verbindungselement bestehende Befestigungseinheit zu drehen. Da das Halteelement aufgrund der einteiligen Ausgestaltung bei einem solchen Verdrehen ebenfalls gedreht wird, kann der Halt des Gegenstandes durch eine geeignete Geometrie des Halteelementes verbessert werden.

Richtungsangaben, wie vorne oder hinten, beziehungsweise Vorderseite und Rückseite beziehen sich, soweit nicht anders angegeben, den Zustand der Befestigungsvorrichtung, in dem diese an der Wand befestigt ist, wobei die der Wand angewandte Seite die Vorderseite darstellt.

Der Exzenter kann erfindungsgemäß einen runden Querschnitt aufweisen. Gemäß einer bevorzugten Ausführungsform stellt der Exzenter aber einen Spiralexzenter dar. Als Spiralexzenter wird im Sinne der Erfindung ein Körper verstanden, bei dem der Abstand zwischen der Achse des Körpers und dem Umfang über einen Winkelbereich von mehr als 180° zunimmt. Die Achse wird bei dem Verbindungselement durch die Durchlassöffnung definiert. Der Abstand zwischen der Durchlassöffnung und dem Umfang des Verbindungselementes bestimmt den Betrag, um den der Gegenstand mit dem auf dem Verbindungselement aufliegenden Teil über dem Befestigungselement liegt. Indem dieser Betrag über einen Winkelbereich von mehr als 180° vergrößert werden kann, kann die Höhe des Gegenstandes exakt eingestellt werden. Zudem ist die Erhebung pro gedrehtem Grad gering, wodurch die Einstellkräfte auch geringer ausfallen.

Einen weiteren Vorteil, den die Verwendung eines Spiralexzenters mit sich bringt, ist, dass der höchste Punkt des Exzenters in jeder Drehposition in einem engen Winkelbereich zu der Senkrechten über der Durchlassöffnung und damit über dem Befestigungselement liegt. Somit liegt der Belastungspunkt des Verbindungselementes, an dem der Gegenstand an dem Exzenter anliegt, in der Regel immer über dem Anschraubpunkt. Dies weist den Vorteil auf, dass Hebelkräfte nicht oder nur geringfügig auftreten und somit ein Verdrehen der Befestigungseinheit auch bei auf dieser aufliegendem Gegenstand vereinfacht ist. Zudem kann ein ungewolltes Verdrehen der Befestigungseinheit aufgrund der Hebelkräfte verhindert werden, das heißt die Verdrehneigung der Befestigungseinheit wird stark reduziert.

Der Umfang des Exzenters, durch den die Mantelfläche des Exzenters gebildet wird, wird im Folgenden auch als Erhebungskurve bezeichnet. Vorzugsweise weist die Erhebungskurve eine Form auf, bei der sich an eine Startgerade eine Spiralkurve anschließt. Das Ende der Spiralkurve kann unmittelbar am Anfang der Startgerade liegen oder es kann eine weitere Gerade, die auch als Endgerade bezeichnet werden kann zwischen dem Ende der Spiralkurve und dem Anfang der Startgerade liegen. Als Gerade, insbesondere Startgerade oder Endgerade werden in diesem Zusammenhang auch virtuelle Geraden verstanden. Als virtuelle Gerade wird hierbei eine Linie bezeichnet, die durch zwei Punkte definiert ist und die die kürzeste Verbindung zwischen diesen Punkten darstellt. Der tatsächliche Verlauf des Umfangs des Verbindungselementes, insbesondere des Exzenters, beziehungsweise der Erhebungskurve weist bei dieser Ausführungsform zwischen den beiden Punkten, die die virtuelle Gerade definieren, einen negativ gekrümmten Kurvenverlauf, der auch als konkaver Kurvenverlauf verstanden werden kann, auf. Bei einer solchen virtuellen Geraden liegt dann der Gegenstand an dem Exzenter bei entsprechender Winkellage, das heißt wenn die virtuelle Gerade die Oberseite des Exzenters bildet und damit der Gegenstand auf der virtuellen Gerade aufliegt, lediglich auf den beiden voneinander beabstandeten Punkten auf, die auch als Kontaktpunkte bezeichnet werden können. Die konkave, das heißt zu der Achse des Exzenters gebogene Verbindung zwischen diesen Punkten steht dabei nicht mit dem Gegenstand in Kontakt. Weiterhin ist es auch möglich, dass mehr als zwei Punkte die virtuelle Gerade definieren. Auch in diesem Fall ist aber die Verbindung zwischen jeweils zwei benachbarten der mindestens drei Punkte jeweils eine konkav zu der Achse des Exzenters gerichtete Kurve.

Gemäß einer bevorzugten Ausführungsform ist das Exzenter so ausgebildet, dass in senkrechter Draufsicht auf die Durchlassöffnung der Befestigungseinheit von der Rückseite der Befestigungseinheit aus in der Richtung gegen den Uhrzeigersinn eine Startgerade in eine Spiralkurve übergeht, in der der Abstand des äußeren Umfangs des Exzenters zu der Achse der Durchlassöffnung in der Richtung gegen den Uhrzeigersinn zunimmt.

Diese Ausführungsform weist mehrere Vorteile auf. Zum einen wird bei dieser Ausführungsform durch eine eventuelle Eigenbewegung der Befestigungseinheit die Befestigung durch ein Befestigungselement, das eine Schraube mit Rechtsgewinde darstellt, unterstützt. Wird nämlich bei dieser Ausführungsform gegen den Uhrzeigersinn gedreht, so liegt, falls der höchste Punkt des Umfangs des Verbindungselementes, das heißt der Erhebungskurve nicht senkrecht oberhalb der Achse der Durchlassöffnung liegt, der höchste Punkt nach recht zu der Senkrechten versetzt. Hierdurch bewirkt ein auf der dem Verbindungselement aufliegender Gegenstand durch sein Eigengewicht einen Eigendrang des Exzenters zur Drehung im Uhrzeigersinn. Da dies bei einer Schraube mit Rechtsgewinde die Eindrehrichtung darstellt, wird die Verbindung dadurch unterstützt beziehungsweise ein Lösen der Schraubverbindung wird verhindert.

Durch das Vorsehen einer Startgerade kann zudem ein zuverlässiger Ausrichtungsvorgang eingeleitet werden. Zudem ist in dieser Position die Kontaktfläche zwischen dem Exzenter und dem Rand des Gegenstandes besonders groß, das heißt umfasst zumindest zwei Kontaktpunkte, so dass ein Verrutschen des Gegenstandes verhindert werden kann. Durch Drehung der Befestigungseinheit und damit des Exzenters nach links kommt der Rand des Gegenstandes dann nach der Startgerade mit der Spiralkurve in Kontakt und der Gegenstand wird gegenüber der Ausgangposition angehoben.

Gemäß einer bevorzugten Ausführungsform liegt in der Erhebungskurve zwischen dem Ende der Spiralkurve und dem Anfang der Startgerade eine Endgerade, die zu der Startgeraden geneigt ist und vorzugsweise einen Winkel kleiner 90° mit der Startgeraden einschließt. Der Übergang zwischen Endgerade und Startgerade ist vorzugsweise eine abgerundete Ecke. Indem die Spiralkurve in eine Endgerade übergeht, ist auch im Endbereich, das heißt in dem Bereich, in dem der Abstand zwischen der Achse der Durchlassöffnung und dem Umfang des Exzenters am größten ist, eine möglichst große Auflagefläche für den Rand des Gegenstandes auf dem Umfang des Exzenters gegeben. Bei der Ausführungsform, bei der der Umfang des Exzenters, das heißt die Erhebungskurve tangential in eine Fläche, durch die Endgerade definiert ist, übergeht, wird der Drehwiderstand erhöht und somit wird ein Endanschlag erzeugt. Der Benutzer erhält hierdurch eine haptische Rückmeldung darüber, dass die Endposition, das heißt die größtmögliche Anhebung des Gegenstandes erreicht ist.

Gemäß einer bevorzugten Ausführungsform besteht zwischen dem Anlageelement und dem Halteelement im Bereich des Verbindungselementes ein umlaufender Aufnahmespalt zur Aufnahme zumindest eines Teils des Gegenstandes. Dies bedeutet, dass vorzugsweise sowohl das Anlageelement als auch das Halteelement einen Durchmesser oder eine Größe aufweisen, die größer als der größte Durchmesser des Verbindungselementes ist. Indem der Aufnahmespalt umlaufend ist, das heißt über den gesamten Umfang des Verbindungselementes vorliegt, ist eine Führung des Randes des Gegenstandes während der gesamten Drehung der Befestigungseinheit um das Befestigungselement geführt und somit die Befestigung des Gegenstandes weiter vereinfacht.

Gemäß einer Ausführungsform weist das Halteelement eine Form auf, bei der die vertikale Abmessung des Halteelementes in einer Winkelposition geringer ist als in jeder anderen Winkelposition. Diese Ausführungsform weist den Vorteil auf, dass das Halteelement in der Winkelposition mit geringster vertikaler Abmessung durch eine Aufnahmeöffnung in oder an dem Gegenstand hindurchgeführt werden kann, deren Höhe dieser geringsten Abmessung entspricht. Durch Drehen des Halteelementes in eine andere Winkelposition und die damit einhergehende Vergrößerung der vertikalen Abmessung des Halteelementes wird dann zumindest ein Teil des Randes der Aufnahmeöffnung durch das Halteelement abgedeckt.

Da das Halteelement bei der erfindungsgemäßen Befestigungsvorrichtung mit dem Verbindungselement einteilig ausgestaltet ist, wird bei der Drehung des Befestigungselementes zur Anpassung der Höhe des Gegenstandes außer dem Verbindungselement auch das Halteelement gedreht wird. Somit erfolgt die Sicherung gegen ein Aushängen des Gegenstandes automatisch bei der Anpassung der Höhe des Gegenstandes und die Befestigung ist hierdurch weiter vereinfacht.

Gemäß einer Ausführungsform weist das Halteelement in Blickrichtung in Achsrichtung der Durchlassöffnung die Form eines Kreissegmentes mit einem Mittelpunktswinkel von größer als 180° auf. Bei dieser Ausführungsform stellt das Halteelement somit die Form eines an einer Seite abgeflachten Kreises dar. Besonders bevorzugt ist bei einem solchen Halteelement das Verbindungselement so ausgerichtet, dass die Startgerade der Erhebungskurve des Exzenters parallel zu der Abflachung liegt. Hierdurch wird dem Benutzer der Befestigungsvorrichtung zum einen ein klarer Hinweis darüber gegeben, wo sich die für Ihn nicht sichtbare Startgerade befindet. Zudem stellt die Ausrichtung des Halteelementes mit Kreisform mit Abflachung in einer Winkelposition, bei der die Abflachung nach oben gerichtet ist, die bevorzugte Ausrichtung zum Einführen der Befestigungseinheit in eine entsprechend große Aufnahmeöffnung dar, da in dieser Ausrichtung die vertikale Abmessung des Halteelementes am geringsten ist. Jedes Verdrehen der Befestigungseinheit zum Ausrichten des Gegenstandes über den Exzenter führt daher zu einer Sicherung des Gegenstandes durch die vergrößerte vertikale Abmessung des Halteelementes.

Die Durchlassöffnung kann bei der Ausführungsform, bei der das Halteelement einen abgeflachten Kreis darstellt, in dem Kreismittelpunkt liegen. Vorzugsweise ist bei dieser Ausführungsform aber die Durchlassöffnung zu dem Kreismittelpunkt seitlich versetzt vorgesehen. Hierdurch kann die Größe des Halteelementes minimiert werden, da der Mittelpunkt so versetzt werden kann, dass auch der Bereich des Exzenters, an dem der Abstand zwischen Umfang und Durchlassöffnung am größten ist, noch von dem Halteelement abgedeckt ist. Hierdurch kann ohne unnötige Vergrößerung des Durchmessers des Halteelementes ein um den Exzeter verlaufender, umlaufender Aufnahmespalt zwischen dem Halteelement und dem Anlageelement gewährleistet werden.

Gemäß einer bevorzugten Ausführungsform ist an dem Halteelement mindestens ein Griffelement, vorzugsweise an der Vorderseite des Halteelementes vorgesehen. Das Halteelement bildet erfindungsgemäß mit dem Verbindungselement und dem Anlageelement die einteilige Befestigungseinheit, wobei das Halteelement den vorderen Teil der Befestigungseinheit bildet. Somit ist es möglich über Krafteinwirkung auf das Halteelement die gesamte Befestigungseinheit zu bewegen und insbesondere zu drehen. Das oder die Griffelemente sind vorzugsweise an der Vorderseite des Halteelementes vorgesehen und können beispielsweise nach vorne ragende Flügel sein.

Vorzugsweise besteht die Befestigungseinheit der Befestigungsvorrichtung aus Kunststoff. Hierdurch lässt sich die Befestigungseinheit auf einfache Weise herstellen, beispielsweise durch Spritzguss. Alternativ kann die Befestigungseinheit der Befestigungsvorrichtung aber beispielsweise auch aus Aluminium oder einem anderen Metall hergestellt sein. Auch bei diesem Material kann die Befestigungseinheit beispielsweise durch Spritzen oder Gießen hergestellt sein.

Gemäß einem weiteren Aspekt betrifft die Erfindung ein Befestigungssystem, das zumindest eine erfindungsgemäße Befestigungsvorrichtung aufweist. Das Befestigungssystem ist dadurch gekennzeichnet, dass das Befestigungssystem weiterhin einen Aufnahmebereich an dem Gegenstand umfasst, in dem mindestens eine Aufnahmeöffnung zur Aufnahme zumindest eines Teils der Befestigungsvorrichtung vorgesehen ist.

Vorteile und Merkmale, die bezüglich des Befestigungssystems beschrieben werden, gelten soweit anwendbar auch für die erfindungsgemäße Befestigungsvorrichtung und jeweils umgekehrt.

Der Aufnahmebereich kann Teil des zu befestigenden Gegenstandes sein, oder kann mit diesem verbunden sein. Vorzugsweise stellt der Aufnahmebereich einen Teil der Rückwand eines Gegenstandes, insbesondere einer Dunstabzugshaube und dabei insbesondere des Gehäuses der Dunstabzugshaube dar. Besonders bevorzugt ragt der Aufnahmebereich über die Oberseite des Gegenstandes hinaus. Hierdurch ist ein einfacher Zugriff auf den Aufnahmebereich und damit auf die in die Aufnahmeöffnung einzuführende Befestigungsvorrichtung gegeben.

Gemäß einer bevorzugten Ausführungsform entspricht die vertikale Abmessung des Halteelementes der Befestigungsvorrichtung in einer Winkelposition der Befestigungseinheit der Höhe der Aufnahmeöffnung des Aufnahmebereiches des Gegenstandes und in allen anderen Winkelpositionen ist die vertikale Abmessung größer als die Höhe der Aufnahmeöffnung.

Als Winkelposition wird hierbei eine Drehposition der Befestigungsvorrichtung und insbesondere des Halteelementes um die Achse der Durchlassöffnung verstanden.

Dass die vertikale Abmessung des Halteelementes der Höhe der Aufnahmevorrichtung entspricht, bedeutet in diesem Zusammenhang, dass die Höhe des Halteelementes in der Winkelposition gleich oder geringfügig kleiner als die Höhe der Aufnahmeöffnung ist. in allen anderen Winkelpositionen ist die vertikale Abmessung des Halteelementes vorzugsweise größer als die Höhe der Aufnahmeöffnung. Durch diese Ausgestaltung kann das Halteelement in einer Winkelposition durch die Aufnahmeöffnung hindurchgeführt werden, insbesondere von hinten durchgeführt werden und in allen anderen Winkelpositionen ist zumindest ein Teil des Randes der Aufnahmeöffnung durch zumindest einen Teil des Halteelementes bedeckt, so dass der Gegenstand sich nicht ungewollt von der Befestigungsvorrichtung trennen kann.

Gemäß einer weiteren Ausführungsform umfasst das Befestigungssystem zusätzlich eine Kappe zur Aufbringung auf das Halteelement der Befestigungsvorrichtung. Eine solche Kappe kann nach Einstellen der Winkelposition der Befestigungsvorrichtung auf das Halteelement aufgebracht werden. Vorzugsweise weist die Kappe hierbei einen größeren Durchmesser als das Halteelement auf, so dass die Gefahr des Aushebens des Gegenstandes weiter verringert ist.

Die Erfindung wird im Folgenden erneut unter Bezugnahme auf die beiliegenden Zeichnungen genauer beschrieben. Es zeigen:
Figur 1: eine schematische perspektivische Ansicht einer Ausführungsform des erfindungsgemäßen Befestigungssystems;
Figur 2: eine schematische perspektivische Rückansicht der Ausführungsform der Befestigungseinheit des Befestigungssystems nach Figur 1;
Figur 3: eine schematische perspektivische Frontansicht der Ausführungsform der Befestigungseinheit des Befestigungssystems nach Figur 1;
Figur 4: eine schematische Querschnittansicht der Ausführungsform der Befestigungseinheit nach Figuren 2 und 3;
Figur 5: eine schematische Längsschnittansicht der Ausführungsform des Befestigungssystems nach Figur 1; und
Figur 6: eine schematische Frontansicht der Ausführungsform der Befestigungseinheit nach Figuren 2 und 3.

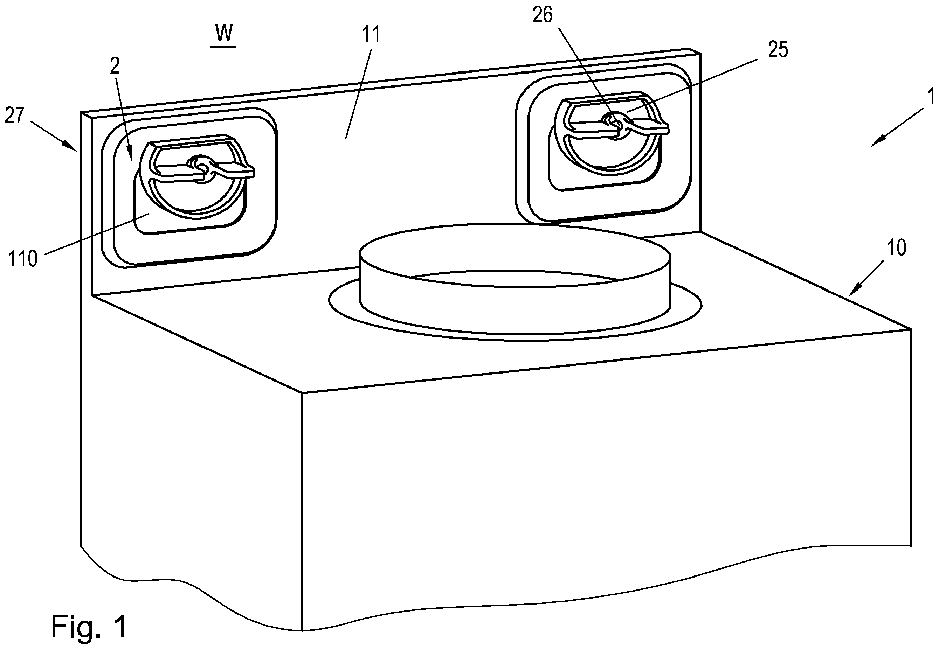

In Figur 1 ist eine Ausführungsform des Befestigungssystems 27 gemäß der vorliegenden Erfindung gezeigt. Der Gegenstand, der mittels des Befestigungssystems an der Wand W befestigt ist, ist in Figur 1 eine Dunstabzugshaube 1, insbesondere das Gehäuse 10 der Dunstabzugshaube 1. Der obere Teil der Rückwand des Gehäuses 10 der Dunstabzugshaube 1 bildet einen Aufnahmebereich 11, in dem Aufnahmeöffnungen 110 vorgesehen sind. In der dargestellten Ausführungsform ist der Aufnahmebereich 11 somit fest mit dem Gegenstand, nämlich der Dunstabzugshaube 1, insbesondere dem Gehäuse 10 der Dunstabzugshaube 1 verbunden und bildet einen Teil davon. Der Aufnahmebereich 11 ragt über die Oberseite des Gehäuses 10 der Dunstabzugshaube 1 hinaus.

In dem Aufnahmebereich 11 sind zwei Aufnahmeöffnungen 110 eingebracht. Die Aufnahmeöffnungen 110 sind jeweils im rechten und linken Randbereich des Aufnahmebereiches 11 eingebracht. Die Aufnahmeöffnungen 110 weisen einen rechteckigen Querschnitt auf, wobei die Höhe der Aufnahmeöffnungen 110 geringer ist als deren Breite. In jede der Aufnahmeöffnungen ist eine Befestigungsvorrichtung 2 eingebracht. Die Befestigungsvorrichtung 2 besteht aus einer Befestigungseinheit 25 und einem Befestigungselement 26. Das Befestigungssystem 27 umfasst somit in der dargestellten Ausführungsform zwei Befestigungsvorrichtungen 2 und zwei entsprechende Aufnahmeöffnungen 110.

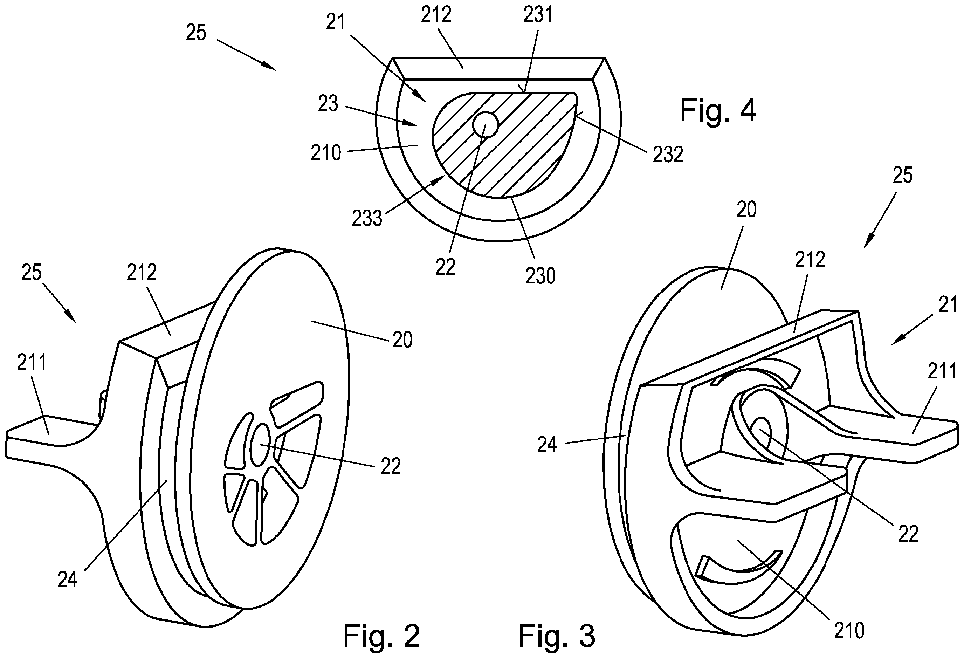

In den Figuren 2 und 3 sind perspektivische Ansichten der Befestigungseinheit 25 gezeigt. Die Befestigungseinheit 25 besteht aus einem Anlageelement 20, einem Verbindungselement 23 (siehe Figur 4) und einem Halteelement 21, die zu einer vorgefertigten Einheit zusammengefasst sind und die Befestigungseinheit 25 somit einteilig ausgestaltet ist. Durch die Befestigungseinheit 25 verläuft eine Durchlassöffnung 22, die einen runden Querschnitt aufweist und sich von dem Halteelement 20 aus durch dieses, das Verbindungselement 23 und das Halteelement 21 hindurch erstreckt und nach vorne und hinten offen ist.

Das Anlageelement 20 stellt in der dargestellten Ausführungsform eine kreisrunde Platte dar. Aus fertigungstechnischen Gründen sind hierbei Aussparungen in der Platte vorgesehen. Die Durchlassöffnung 22 ist in dem Anlageelement 20 versetzt zu dessen Mittelpunkt eingebracht.

Über das Verbindungselement 23 ist das Anlageelement 20 mit dem Halteelement 21 verbunden. Das Halteelement 21 weist in der dargestellten Ausführungsform eine Grundplatte 210 auf. Die Grundplatte 210 besitzt die Form eines Kreissegmentes mit einem Mittelpunktwinkel von größer 180°. Das bedeutet, dass die Grundplatte 210 und damit das Halteelement 21 die Form eines Kreises mit einer Abflachung 212 aufweist. Nach vorne erstrecken sich von der Grundplatte 210 des Halteelementes 21 Griffelemente 211, die in der gezeigten Ausführungsform Flügel darstellen. Zusätzlich weist das Halteelement 21 einen sich von der Grundplatte 210 nach vorne erstreckenden Rahmen am Umfang der Grundplatte 210 auf. Im Bereich der Abflachung 210 des Halteelementes 21 ist der Rahmen nach außen geneigt und kann so als Einführhilfe dienen. Die Durchlassöffnung 22 befindet sich in dem Halteelement 21 ebenfalls von dem Kreismittelpunkt des abgeflachten Kreises versetzt.

Das Verbindungselement 23 der Befestigungseinheit 25 wird nun unter Bezugnahme auf die Figur 4 genauer beschrieben.

Das Verbindungselement 23 stellt einen Körper mit einer Längserstreckung zwischen der Rückseite des Halteelementes 21 und der Vorderseite des Anlageelementes 20 dar. Der Querschnitt des Verbindungselementes ist exzentrisch zu der Durchlassöffnung ausgelegt. Das Verbindungselement 23 bildet somit ein Exzenter. In der in Figur 4 gezeigten bevorzugten Ausführungsform stellt der Exzenter ein Spiralexzenter dar. In der Ansicht von hinten auf das Verbindungselement 23 in der Richtung der Durchlassöffnung 22 bildet der Umfang des Verbindungselementes 23 somit eine Erhebungskurve 230, die folgende Bereiche aufweist. Parallel zu der Abflachung 212 des Halteelementes 21 ist die Oberseite des Verbindungselementes 23 als eine Gerade ausgebildet, die im Folgenden als Startgerade 231 bezeichnet wird. An dem linken ende der Startgeraden 231, das heißt in der Richtung gegen den Uhrzeigersinn schließt sich an die Startgerade 231 eine Spiralkurve 233 an. Über den Verlauf der Spiralkurve 233 nimmt der Abstand des Umfangs des Verbindungselementes 23 zu der Durchlassöffnung gegen den Uhrzeigersinn zu. Nach einem Winkelbereich von größer 180°, in der dargestellten Ausführungsform beispielsweise nach 225° geht die Spiralkurve 233 in eine Endgerade 232 über. Die Endgerade 232 und die Startgerade 231 stehen hierbei in einem spitzen Winkel zueinander und das Ende der Endgeraden 232 ist mit dem Anfang der Startgeraden 231 über eine Abrundung verbunden.

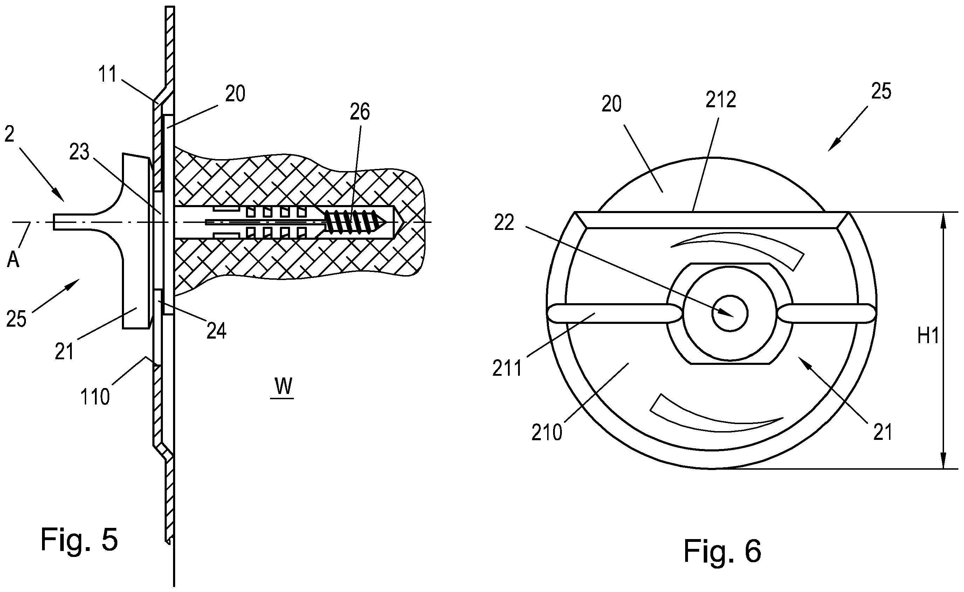

Die Befestigungsvorrichtung 2 wird, wie in Figur 5 gezeigt an der Wand W montiert. Hierbei wird zunächst ein Loch für das Befestigungselement 26 in die Wand W gebohrt. Anschließend wird die Befestigungseinheit 25 so vor das Loch gebracht, dass die Durchlassöffnung 20 mit dem Loch ausgerichtet ist. Das Befestigungselement 26, das vorzugsweise eine Schraube darstellt, wird dann durch die Durchlassöffnung 22 geführt und in dem Loch in der Wand W verschraubt. Hierbei wird die Schraube nur soweit angezogen, dass eine Drehung der Befestigungseinheit 25 um das Befestigungselement 26 noch möglich ist, ein Herabfallen der Befestigungseinheit 25 aber nicht mehr zu befürchten ist. Insbesondere wird die Schraube so weit angezogen, bis das Anlageelement 20 der Befestigungseinheit 25 an der Wand W anliegt. Die Befestigungseinheit 25 wird dann falls erforderlich so ausgerichtet, dass die Abflachung 212 des Halteelementes 21 nach oben weist. In dieser Position wird der Gegenstand mit der Befestigungseinheit 25 verbunden. Insbesondere wird der Aufnahmebereich 11 vor die Befestigungseinheit(en) 25 gebracht und die in dem Aufnahmebereich 11 vorgesehenen Aufnahmeöffnungen 110 mit den Befestigungseinheiten 25 ausgerichtet.

Wie sich aus Figur 6 entnehmen lässt, weist das Halteelement 21 in einer Position, in der die Abflachung 212 nach oben gerichtet ist, in der Vertikalen eine vertikale Abmessung H1 auf, die geringer ist als der Durchmesser der Kreisform des Halteelementes 21. Die Aufnahmeöffnung 110 in dem Aufnahmebereich 11 weist vorzugsweise ebenfalls eine Höhe auf, die der Abmessung H1 entspricht oder geringfügig größer ist als H1. Nachdem das Halteelement 21 durch die Aufnahmeöffnung 110 von hinten geführt wurde, kann der Gegenstand, an dem der Aufnahmebereich 11 vorgesehen ist, insbesondere das Gehäuse 10 der Dunstabzugshaube 1 abgesenkt werden. Hierdurch gelangt der obere Rand der Aufnahmeöffnung 110 in den Aufnahmespalt 24, der zwischen der Rückseite des Halteelementes 21 und der Vorderseite des Anlageelementes 20 gebildet ist. Der Gegenstand kann soweit abgesenkt werden, bis der obere Rand der Aufnahmeöffnung 110 mit dem Verbindungselement 23 in Kontakt kommt. Bei der gezeigte Ausführungsform, bei der die Abflachung 212 des Halteelementes 21 parallel zu der Startgerade 231 der Erhebungskurve 230 auf dem Umfang des Verbindungselementes 23 liegt, kommt der obere Rand der Aufnahmeöffnung 110 somit mit der Startgerade 231 in Kontakt und liegt auf diesem Bereich des Umfangs des Verbindungselementes 23 auf.

In diesem Zustand kann der Gegenstand parallel zur Wand W verschoben werden, um einen Seitenversatz auszugleichen. Sollte eine oder beide Seite des Gegenstandes, insbesondere des Gehäuses 10 der Dunstabzugshaube in diesem Zustand zu niedrig sein, kann der Höhenversatz wie folgt ausgeglichen werden.

Durch Drehen der Befestigungseinheit 25, das unter Benutzung der Griffelemente 211 erfolgen kann, gegen den Uhrzeigersinn, gerät der obere Rand der Aufnahmeöffnung 110 mit dem Bereich des Umfangs des Verbindungselementes 23, der durch die Spiralkurve 233 gebildet ist, in Kontakt. Da der Abstand zwischen der Achse A der Durchlassöffnung 22 und dem Umfang des Verbindungselementes 23 in diesem Bereich der Erhebungskurve 230 zunimmt, wird der Gegenstand angehoben, das heißt vertikal nach oben verschoben.

Durch das Drehen der Befestigungseinheit 25 wird zum dem auch das Halteelement 21 vor der Aufnahmeöffnung 110 bewegt, das heißt verdreht. Wie sich aus der Figur 6 ergibt, ist die Durchlassöffnung 22 zu dem Mittelpunkt des Kreises des Halteelementes 21 nach rechts versetzt. Durch Drehen der Befestigungseinheit 25 gegen den Uhrzeigersinn wird somit das längere Teil der Grundplatte 210 nach unten gedreht. Zudem wird die Abflachung 212 nach links gekippt, so dass die Abmessung des Halteelementes 21 in der Vertikalen zunimmt. Hierdurch wird sowohl der obere Rand der Aufnahmeöffnung 110 als auch der untere Rand der Aufnahmeöffnung 110 von dem Halteelement 21 nach vorne teilweise abgedeckt. Ein Herausfallen oder Herausspringen des Gegenstandes aus dem Aufnahmespalt 24 der Befestigungseinheit 25 ist somit nicht zu befürchten. Erreicht der obere Rand der Aufnahmeöffnung 110 auf der Erhebungskurve 230 bei weiterem Drehen der Befestigungseinheit 25 die Endgerade 232, so ist die maximale Anhebung des Gegenstandes erreicht. Bei einem weiteren Drehen der Befestigungseinheit 25 gegen den Uhrzeigersinn gerät der obere Rand der Aufnahmeöffnung 110 dann wieder in Kontakt mit der Startgerade 231 und der Gegenstand senkt sich ab. Durch Drehen der Befestigungseinheit 25 von der Endgerade 232 oder einer Winkelposition entlang der Spiralkurve 233 im Uhrzeigersinn, wird der Gegenstand abgesenkt.

Nachdem der Benutzer die gewünschte Höhe des Gegenstandes durch entsprechendes Drehen der Befestigungseinheit 25 eingestellt hat, kann er das Befestigungselement 26, insbesondere die Schraube, festziehen. Während des Festziehens der Schraube kann die Befestigungseinheit 25 an den Griffelementen 211 festgehalten werden. Durch dieses weitere Anziehen der Schraube wird das Anlageelement 20 an die Wand W gedrückt und die Befestigungseinheit 25 somit zwischen dem Schraubenkopf und der Wand W geklemmt. Ein ungewolltes Verdrehen der Befestigungseinheit wird hierbei durch diese Klemmkraft verhindert. Zudem liegt der höchste vertikale Punkt der Erhebungskurve 230 während des Drehens der Befestigungseinheit 25 stets senkrecht über der Durchlassöffnung 22 oder in einem geringen horizontalen Abstand dazu. Ist der höchste vertikale Punkt zu der Durchlassöffnung 22 versetzt, so liegt dieser rechts von der Durchlassöffnung 22. Indem auf diesem Punkt der obere Rand der Aufnahmeöffnung 110 aufliegt und damit das Gewicht des Gegenstandes zumindest teilweise wirkt, kann gegebenenfalls ein Eigendrang der Befestigungseinheit 25 zur Drehung um die Durchlassöffnung 22 erzeugt werden. Dieser Eigendrang kann bei einer Schraube mit Rechtsgewinde, die vorzugsweise als Befestigungselement 26 verwendet wird, positiv genutzt werden. Durch ein gewisses Drehen der Befestigungseinheit 25 um die Durchlassöffnung 22 wird nämlich die Schraube, die über den Schraubenkopf mit der Befestigungseinheit 25 in Verbindung steht, im Uhrzeigersinn bewegt, das heißt weiter hereingeschraubt.

Die vorliegende Erfindung ist nicht auf die dargestellte Ausführungsform beschränkt. Beispielsweise kann auch Exzenter mit einem kreisrunden Querschnitt oder einem ovalen Querschnitt als Verbindungselement verwendet werden. Auch die Form des Halteelementes oder des Anlageelementes kann von der gezeigten Form abweichen. Allerdings ist bevorzugt, dass das Halteelement eine Form aufweist, die bei Drehung um die Durchlassöffnung eine Änderung der vertikalen Abmessung des Halteelementes bewirkt.

Mit der vorliegenden Erfindung wird somit eine Lösung bereitgestellt, auf einfache und zuverlässige Weise eine Befestigung eines Gegenstandes, insbesondere des Gehäuses einer Dunstabzugshaube an einer Wand mit der Möglichkeit des werkzeuglosen Ausrichtens des Gegenstandes zu schaffen. Insbesondere können Höhen- und Seitenversätze ausgeglichen werden.

Hierbei kann bei der Befestigung eines Gegenstandes, insbesondere einer Dunstabzugshaube, an einer Wand, der Gegenstand mit möglichst geringem Aufwand ausgerichtet werden. Vorzugsweise vergrößert sich bei der erfindungsgemäßen Befestigungseinheit durch das Verdrehen das vordere Außenmaß, insbesondere des Halteelementes in der Vertikalen und der Gegenstand, insbesondere die Haube kann nicht mehr aus der Befestigungslage herausrutschen.

Neben dem einfachen Aufbau und der einfachen Handhabung weist die vorliegende Erfindung weitere Vorteile auf. Insbesondere kann die Befestigungseinheit kostengünstig hergestellt werden. Probleme durch Schwankungen in der Materialqualität sind quasi nicht vorhanden. Die Anzahl der Elemente der Befestigungsvorrichtung kann auf zwei beschränkt sein, nämlich die Befestigungseinheit und ein Befestigungselement in Form einer Schraube. Damit ist die Teilevielfalt reduziert und die Lagerhaltung vereinfacht. Schließlich kann bei der vorliegenden Erfindung auf einfache Weise eine sichere Halterung während der Befestigung des Gegenstandes sowie nach der Befestigung erzielt werden.

### Bezugszeichenliste

- 1: Dunstabzugshaube
- 10: Gehäuse
- 11: Aufnahmebereich
- 110: Aufnahmeöffnung

- 2: Befestigungsvorrichtung
- 20: Anlageelement
- 21: Halteelement
- 210: Grundplatte
- 211: Griffelement
- 212: Abflachung

- 22: Durchlassöffnung

- 23: Verbindungselement
- 230: Erhebungskurve
- 231: Startgerade
- 232: Endgerade
- 233: Spiralkurve

- 24: Aufnahmespalt

- 25: Befestigungseinheit

- 26: Befestigungselement

- 27: Befestigungssystem

- A: Achse Durchlassöffnung

- W: Wand
- H: Höhenabmessung Halteelement

## Patentansprüche

1. Befestigungsvorrichtung zur Befestigung eines Gegenstandes an einer Wand (W), die ein Befestigungselement (26), ein Anlageelement (20) zum Anliegen an der Wand (W) und ein Halteelement (21) zumindest zum Halten zumindest eines Teils des Gegenstandes sowie eine Durchlassöffnung (22) aufweist, die zumindest durch das Halteelement (21) und das Anlageelement (20) zum Durchlass des Befestigungselementes (26) verläuft, **dadurch gekennzeichnet, dass** das Anlageelement (20) und das Halteelement (21) über ein Verbindungselement (23) miteinander verbunden sind, das Halteelement (21), das Verbindungselement (23) und das Anlageelement (20) zusammen eine einteilige Befestigungseinheit (25) ist und das Verbindungselement (23) einen Exzenter darstellt.

2. Befestigungsvorrichtung nach Anspruch 1, **dadurch gekennzeichnet, dass** der Exzenter einen Spiralexzenter darstellt.

3. Befestigungsvorrichtung nach einem der Ansprüche 1 oder 2, **dadurch gekennzeichnet, dass** der Umfang des Verbindungselementes (23) eine Erhebungskurve (230) bildet, bei der in senkrechter Draufsicht auf die Durchlassöffnung (22) der Befestigungseinheit (25) von der Rückseite der Befestigungseinheit (25) aus in der Richtung gegen den Uhrzeigersinn eine Startgerade (231) in eine Spiralkurve (233) übergeht, über die der Abstand des äußeren Umfangs des Verbindungselementes (23) zu der Achse (A) der Durchlassöffnung (22) in der Richtung gegen den Uhrzeigersinn zunimmt.

4. Befestigungsvorrichtung nach Anspruch 3, **dadurch gekennzeichnet, dass** zwischen dem Ende der Spiralkurve (233) und dem Anfang der Startgerade (231) eine Endgerade (233) liegt, die zu der Startgerade (231) geneigt ist.

5. Befestigungsvorrichtung nach einem der Ansprüche 1 bis 4, **dadurch gekennzeichnet, dass** das Halteelement (21) eine Form aufweist, bei der die vertikale Abmessung (H1) des Halteelementes (21) in einer Winkelposition geringer ist als in jeder anderen Winkelposition des Halteelementes (21) bezüglich der Durchlassöffnung (22).

6. Befestigungsvorrichtung nach einem der Ansprüche 1 bis 5, **dadurch gekennzeichnet, dass** zwischen dem Anlageelement (20) und dem Halteelement (21) im Bereich des Verbindungselementes (23) ein umlaufender Aufnahmespalt (24) zur Aufnahme zumindest eines Teils des Gegenstandes besteht.

7. Befestigungsvorrichtung nach einem der Ansprüche 1 bis 6, **dadurch gekennzeichnet, dass** an dem Halteelement (21) mindestens ein Griffelement (211), vorzugsweise an der Vorderseite des Halteelementes (21) vorgesehen ist.

8. Befestigungssystem, das zumindest eine Befestigungsvorrichtung (2) nach einem der Ansprüche 1 bis 7 aufweist, **dadurch gekennzeichnet, dass** das Befestigungssystem (27) weiterhin einen Aufnahmebereich (11) an dem Gegenstand umfasst, in dem mindestens eine Aufnahmeöffnung (110) zur Aufnahme zumindest eines Teils der Befestigungsvorrichtung (2) vorgesehen ist.

9. Befestigungssystem nach Anspruch 8, **dadurch gekennzeichnet, dass** die vertikale Abmessung des Halteelementes (21) der Befestigungsvorrichtung (2) in einer Winkelposition der Befestigungseinheit (25) der Höhe der Aufnahmeöffnung (110) des Aufnahmebereiches (11) des Gegenstandes entspricht und in allen anderen Winkelpositionen größer als die Höhe der Aufnahmeöffnung (110) ist.

10. Befestigungssystem nach einem der Ansprüche 8 oder 9, **dadurch gekennzeichnet, dass** der Aufnahmebereich (11) einen Teil einer Dunstabzugshaube (1), insbesondere der Rückwand des Gehäuses (10) einer Dunstabzugshaube (1), darstellt.

## Claims

1. Fastening device for fastening an object to a wall (W), having a fastening element (26), a bearing element (20) for bearing against the wall (W) and a holding element (21) at least for holding at least part of the object as well as a through opening (22) running at least through the holding element (21) and the bearing element (20) to allow passage of the fastening element (26), **characterised in that** the bearing element (20) and the holding element (21) are connected to one another by way of a connecting element (23), the holding element (21), the connecting element (23) and the bearing element (20) together form a single-piece fastening unit (25) and the connecting element (23) is an eccentric.

2. Fastening device according to claim 1, **characterised in that** the eccentric is a spiral eccentric.

3. Fastening device according to one of claims 1 or 2, **characterised in that** the periphery of the connecting element (23) forms an elevation curve (230), with which in a perpendicular top view of the through opening (22) of the fastening unit (25) from the rear face of the fastening unit (25) in the anticlockwise direction an initial straight line (231) transitions into a spiral curve (233), over which the distance between the outer periphery of the connecting element (23) and the axis (A) of the through opening (22) increases in the anticlockwise direction.

4. Fastening device according to claim 3, **characterised in that** a final straight line (233), which is angled in relation to the initial straight line (231), lies between the end of the spiral curve (233) and the start of the initial straight line (231).

5. Fastening device according to one of claims 1 to 4, **characterised in that** the holding element (21) has a shape, whereby the vertical dimension (H1) of the holding element (21) is smaller in one angular position than in any other angular position of the holding element (21) in relation to the through opening (22).

6. Fastening device according to one of claims 1 to 5, **characterised in that** there is a circumferential gap (24) between the bearing element (20) and the holding element (21) in the region of the connecting element (23), to receive at least part of the object.

7. Fastening device according to one of claims 1 to 6, **characterised in that** at least one grip element (211) is provided on the holding element (21), preferably on the front face of the holding element (21).

8. Fastening system, which has at least one fastening device (2) according to one of claims 1 to 7, **characterised in that** the fastening system (27) also comprises a receiving region (11) on the object, in which at least one receiving opening (110) for receiving at least part of the fastening device (2) is provided.

9. Fastening system according to claim 8, **characterised in that** the vertical dimension of the holding element (21) of the fastening device (2) corresponds to the height of the receiving opening (110) of the receiving region (11) of the object in one angular position of the fastening unit (25) and in all other angular positions is greater than the height of the receiving opening (110).

10. Fastening system according to one of claims 8 or 9, **characterised in that** the receiving region (11) is part of an extractor hood (1), in particular of the rear wall of the housing (10) of an extractor hood (1).

## Revendications

1. Dispositif de fixation destiné à la fixation d'un objet à une paroi (W), qui présente un élément de fixation (26), un élément d'installation (20) destiné à l'installation au niveau de la paroi (W) et un élément de maintien (21) au moins destiné au maintien d'au moins une partie de l'objet ainsi qu'une ouverture de passage (22), qui s'étend au moins à travers l'élément de maintien (21) et l'élément d'installation (20) pour le passage de l'élément de fixation (26), **caractérisé en ce que** l'élément d'installation (20) et l'élément de maintien (21) sont reliés l'un à l'autre par l'intermédiaire d'un élément de liaison (23), l'élément de maintien (21), l'élément de liaison (23) et l'élément d'installation (20) sont ensemble une unité de fixation d'un seul tenant (25) et l'élément de liaison (23) représente un excentrique.

2. Dispositif de fixation selon la revendication 1, **caractérisé en ce que** l'excentrique représente un excentrique en spirale.

3. Dispositif de fixation selon l'une des revendications 1 ou 2, **caractérisé en ce que** la périphérie de l'élément de liaison (23) forme une courbe d'élévation (230), dans laquelle dans une vue de dessus perpendiculaire de l'ouverture de passage (22) de l'unité de fixation (25) une ligne droite de départ (231) depuis la face arrière de l'unité de fixation (25) jusque dans la direction opposée au sens des aiguilles d'une montre est en continuité avec une courbe en spirale (233), par l'intermédiaire de laquelle la distance de la périphérie externe de l'élément de liaison (23) à l'axe (A) de l'ouverture de passage (22) augmente dans la direction inverse du sens des aiguilles d'une montre.

4. Dispositif de fixation selon la revendication 3, **caractérisé en ce que**, entre l'extrémité de la courbe en spirale (233) et le début de la ligne droite de départ (231) se trouve une ligne droite de fin (233) qui est inclinée vers la ligne droite de départ (231).

5. Dispositif de fixation selon l'une des revendications 1 à 4, **caractérisé en ce que** l'élément de maintien (21) présente une forme dans laquelle la dimension verticale (H1) de l'élément de maintien (21) est plus faible dans une position angulaire que dans chaque autre position angulaire de l'élément de maintien (21) en ce qui concerne l'ouverture de passage (22).

6. Dispositif de fixation selon l'une des revendications 1 à 5, **caractérisé en ce que** dans la zone de l'élément de liaison (23) entre l'élément d'installation (20) et l'élément de maintien (21) une fente de réception périphérique (24) destinée à la réception d'au moins une partie de l'objet est présente.

7. Dispositif de fixation selon l'une des revendications 1 à 6, **caractérisé en ce que**, au niveau de l'élément de maintien (21), au moins un élément de saisie (211), de préférence au niveau de la face avant de l'élément de maintien (21), est prévu.

8. Système de fixation qui présente au moins un dispositif de fixation (2) selon l'une des revendications 1 à 7, **caractérisé en ce que** le système de fixation (27) comprend en outre une zone de réception (11) au niveau de l'objet, dans laquelle au moins une ouverture de réception (110) est prévue pour la réception d'au moins une partie du dispositif de fixation (2).

9. Système de fixation selon la revendication 8, **caractérisé en ce que** la dimension verticale de l'élément de maintien (21) du dispositif de fixation (2) dans une position angulaire de l'unité de fixation (25) correspond à la hauteur de l'ouverture de réception (110) de la zone de réception (11) de l'objet et est plus grande que la hauteur de l'ouverture de réception (110) dans toutes les autres positions angulaires.

10. Système de fixation selon l'une des revendications 8 ou 9, **caractérisé en ce que** la zone de réception (11) représente une partie d'une hotte aspirante (1), en particulier la paroi arrière de l'enveloppe (10) d'une hotte aspirante (1).
